# EUROPÄISCHE PATENTSCHRIFT

(11) **EP 1 023 334 B1**
(45) Veröffentlichungstag und Bekanntmachung des Hinweises auf die Patenterteilung: **26.02.2003**
(21) Anmeldenummer: 98949985.0
(22) Anmeldetag: 03.09.1998
(51) Int. Cl.: C08F 4/605, C08F 10/00

(54) **KATALYSATORSYSTEM**
CATALYST SYSTEM
SYSTEME CATALYSEUR

(30) Priorität: 06.10.1997 DE 19744102
(43) Veröffentlichungstag der Anmeldung: 02.08.2000
(73) Patentinhaber: Basell Polyolefine GmbH, 50389 Wesseling (DE)
(72) Erfinder: BOHNEN, Hans, D-65527 Niedernhausen (DE); FRITZE, Cornelia, D-60529 Frankfurt am Main (DE)
(86) Internationale Anmeldenummer: EP9805589
(87) Internationale Veröffentlichungsnummer: WO99018135

(56) Entgegenhaltungen:
- EP-A- 0 601 830
- WO-A-92/01005

## Beschreibung

Die vorliegende Erfindung betrifft ein Katalysatorsystem, enthaltend eine chemische Verbindung, die cokatalytische Wirkung aufweist, in Kombination mit einem Metallocen und einer Aluminiumverbindung. Die cokatalytisch wirkende chemische Verbindung ist neutral aufgebaut und weist mehrere Lewis-saure Zentren auf. Das Katalysatorsystem kann vorteilhaft zur Polymerisation von Olefinen eingesetzt werden. Hierbei kann auf die Verwendung von Aluminoxanen wie Methylaluminoxan (MAO) als Cokatalysator verzichtet werden und dennnoch hohe Katalysatoraktivitäten erzielt werden. Das Katalysatorsystem kann sowohl homogen als auch geträgert zur Polymerisation eingesetzt werden.

Die Rolle von kationischen Komplexen bei der Ziegier-Natta-Polymerisation mit Metallocenen ist allgemein bekannt (H.H. Brintzinger, D. Fischer, R. Mülhaupt, R. Rieger, R. Waymouth, Angew. Chem. 1995, 107, 1255-1283).
MAO als Co-Katalysator hat den Nachteil in hohem Überschuß eingesetzt zu werden. Die Darstellung kationischer Alkylkomplexe eröffnet den Weg MAO freier Katalysatoren mit vergleichbarer Aktivität, wobei der Co-Katalysator nahezu stöchiometrisch eingesetzt werden kann.
Die Synthese von "Kationen-ähnlichen" Metallocen-Polymerisationskatalysatoren, wird im J. Am. Chem. Soc. 1991, 113, 3623 beschrieben. Darin erfolgt die Alkylabstraktion von einer Metallocenalkylverbindung mittels Trispentafluorphenylboran. In EP 427 697 wird dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beschrieben. Ein Verfahren zur Herstellung von Salzen der allgemeinen Form LMX⁺ XA⁻ nach dem oben beschriebenen Prinzip wird in EP 520 732 beschrieben.

EP 558158 beschreibt zwitterionische Katalysatorsysteme, die aus Metallocendialkyl-Verbindungen und Salzen der Form [R₃NH]⁺ [B(C₆H₅)₄]⁻ dargestellt werden Die Umsetzung eines solchen Salzes mit z.B. Cp₂ZrMe₂ liefert durch Protolyse unter Methanabspaltung intermediär ein Zirkonocenmethyl-Kation. Dieses reagiert über C-H-Aktivierung zum Zwitterion Cp₂Zr⁺-(m-C₆H₄)-BPh₃⁻ ab. Das Zr-Atom ist dabei kovalent an ein Kohlenstoffatom des Phenylrings gebunden und wird über agostische Wasserstoffbindungen stabilisiert.
US 5, 348, 299 beschreibt zwitterionische Katalysatorsysteme, die aus Metallocendialkyl-Verbindungen und Salzen der Form [R₃NH]⁺ [B(C₆F₅)₄]⁻ durch Protolyse dargestellt werden. Die C-H-Aktivierung als Folgereaktion unterbleibt dabei. EP 426 637 nutzt ein Verfahren in dem das lewis-saure CPh₃⁺ Kation zur Abstraktion der Methylgruppe vom Metallzentrum eingesetzt wird. Als schwach koordinierendes Anion fungiert ebenfalls B(C₆F₅)₄⁻.

EP-A 601 830 beschreibt ein Katalysatorsystem, enthaltend eine Organoboraluminiumoxyverbindung, eine Metallocenverbindung und eine Organoaluminiumverbindung, das zur Polymerisation von Olefinen verwendet wird.

Nachteile der bislang bekannten Katalysatorsysteme sind die hohe Empfindlichkeit gegenüber Katalysatorgiften und das Problem des "leaching" bei der Trägerung der Katalysatorsysteme.

Die Aufgabe bestand darin ein alternatives Katalysatorsystem zur Verfügung zu stellen, mit dem die Nachteile des Standes der Technik vermieden und trotzdem hohe Polymersationsaktivitäten erreicht werden.

Die vorliegende Erfindung betrifft somit ein Katalysatorsystem, enthaltend a) mindestens eine cokatalytisch wirkende chemische Verbindung A, b) mindestens ein Metallocen B, c) mindestens eine Aluminiumverbindung C und zusätzlich einen Träger, sowie ein Verfahren zur Herstellung dieses Katalysatorsystems. Eingesetzt wird das Katalysatorsystem für die heterogene Polymerisation von Olefinen. Bei der heterogenen Polymerisation wird ein Trägermaterial eingesetzt, welches gegebenenfalls vorbehandelt ist. Zudem ist ein Verfahren zur Herstellung von Polyolefinen in Gegenwart des erfindungsgemäßen Katalysatorsystems beschrieben.

Das erfindungsgemäße Katalysatorsystem enthält als cokatalytisch wirkende chemische Verbindung A eine Organoboraluminiumverbindung, die Einheiten der Formel I enthält, 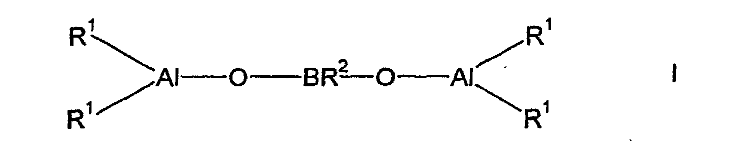 worin R¹ gleich oder verschieden sind und ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind oder R¹ kann eine OSiR₃³-Gruppe sein, worin R³ gleich oder verschieden sind und ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind,
R² ist ein Halogenatom, C₁-C₂₀-Halogenalkyl, C₆-C₂₀-Halogenaryl, C₇-C₄₀-Halogenarylalkyl, C₇-C₄₀-Halogenalkylaryl oder R² kann eine OSiR₃³-Gruppe sein, worin R³ gleich oder verschieden sind und ein Halogenatom, C₁-C₂₀-Halogenalkyl, C₆-C₂₀-Halogenaryl, C₇-C₄₀-Halogenarylalkyl, C₇-C₄₀-Halogenalkylaryl sind.

Die Einheiten der Formel I enthaltende chemische Verbindung A kann als Monomer oder als lineares, cyclisches oder käfigartiges Oligomer vorliegen.

Es können auch zwei oder mehr chemische Verbindungen, welche Einheiten der Formel I enthalten durch Lewis-Säure-Base Wechselwirkungen untereinander Dimere, Trimere oder höhere Assoziate bilden.

Cokatalytisch wirkende chemische Verbindungen A sind erhältlich durch Umsetzungen von Dihydroxy-organo-boranen gemäß Formel III oder Triorganoboroxinen gemäß der Formel IV mit Organoaluminiumverbindungen der Formel V.

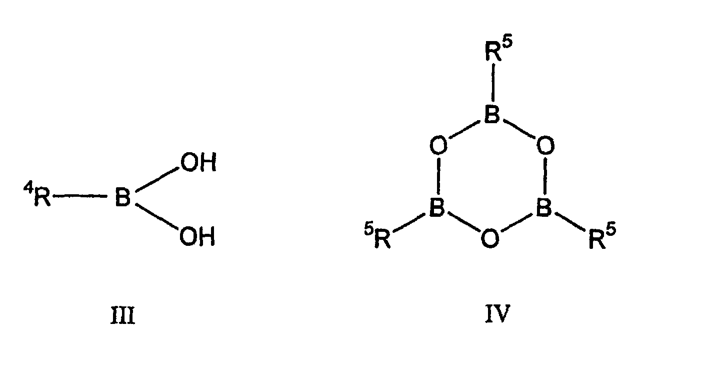

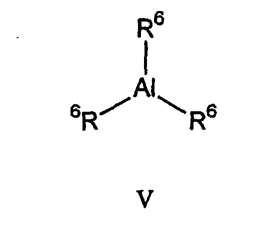

Darin ist R⁴ Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl bedeuten, oder R⁴ kann eine OSiR₃³-Gruppe sein, worin R³ gleich oder verschieden sind und ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sein.
Bevorzugt sind dabei folgende Reste wie Pentafluor-phenyl-, 3,5-bis(trifluormethyl)-phenyl-, phenyl- , methyl-, ethyl-, propyl-, butyl-, 3,4,5-trifluor-phenyl-, 3,5-difluorphenyl-, 4-methyl-phenyl-, 4-tertbutyl-phenyl-, 3,5-dimethyl-phenyl-, 2,3-dimethyl-phenyl-, 2-methyl-phenyl- oder 4-(trifluormethyl)phenyl-. Besonders bevorzugt sind die Reste Pentafluor-phenyl-, phenyl- und 4-methyl-phenyl-.

Die Reste R⁵ können gleich oder verschieden sein und ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₈-C₂₀-Halogenaryl, C₆-C₂₀-Aryloxy, C₇-C₄₀-Arylalky, C₇-C₄₀-Halogenarylalkyl, C₇-C₄₀-Alkylaryl, C₇-C₄₀-Halogenalkylaryl bedeuten, oder R⁵ können eine OSiR₃³-Gruppe sein, worin R³ gleich oder verschieden sind und ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sein.
Bevorzugt sind dabei folgende Reste wie Pentafluor-phenyl-, 3,5-bis(trifluormethyl)-phenyl-, phenyl- , methyl-, ethyl-, propyl-, butyl-, 3,4,5-trifluor-phenyl-, 3,5-difluorphenyl-, 4-methyl-phenyl-, 4-tertbutyl-phenyl-, 3,5-dimethyl-phenyl-, 2,3-dimethyl-phenyl-, 2-methyl-phenyl- oder 4-(trifluormethyl)phenyl-.
Besonders bevorzugt sind die Reste Pentafluor-phenyl-, phenyl- und 4-methyl-phenyl-.

Die Reste R⁶ können gleich oder verschieden sein und ein Halogenatom, ein Wasserstoffatom, eine C₁-C₄₀-kohlenstoffhaltige Gruppe wie C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl bedeuten.
Bevorzugt für R⁶ sind C₁-C₆-Alkyl-Gruppen, besonders bevorzugt für R⁶ sind C₁-C₄-Alkyl-Gruppen.

Zur Herstellung der cokatalytisch wirkenden chemischen Verbindung A, können eine oder mehrere Verbindungen der Formel III oder IV mit einer oder mehreren Verbindungen der Formel V, in jedem beliebigen stöchiometrischen Verhältnis, umgesetzt werden. Bevorzugt ist die Menge von 2 bis 6 Äquivalenten einer Verbindung der Formel V bezogen auf 1 Äquvalent einer Verbindung der Formel III oder IV. Besonders bevorzugt ist die Menge von 2 bis 2.5 Äquivalenten einer Verbindung der Formel V bezogen auf 1 Äquvalent einer Verbindung der Formel III oder IV.
Die Umsetzung erfolgt in einem aliphatischen oder aromatischen Lösemittel wie Toluol, Heptan, Tetrahydrofuran oder Diethylether. Es können auch Lösemittelgemische eingesetzt werden.
Die cokatalytisch wirkende chemische Verbindung der Formel I kann isoliert werden oder ohne Isolierung in Lösung weiter umgesetzt werden. Unter dem Begriff Lösung bzw. Lösemittel werden auch Suspensionen bzw. Suspensionsmittel verstanden, d.h. die in dem erfindungsgemäßen Verfahren eingesetzten Edukte wie auch die erhaltenen Produkte können zum Teil oder vollständig gelöst sein oder auch zum Teil oder vollständig suspendiert vorliegen.

Die in dem erfindungsgemäßen Katalysatorsystem enthaltenen Metallocene B können z.B. verbrückte oder unverbrückte Biscyclopentadienylkomplexe sein, wie sie z.B. in EP 129 368, EP 561 479, EP 545 304 und EP 576 970 beschrieben sind, Monocyclopentadienylkomplexe, wie verbrückte Amidocyclopentadienylkomplexe die z.B in EP 416 815 beschrieben sind, mehrkernige Cyclopentadienylkomplexe wie in EP 632 063 beschreiben, π-Ligand substituierte Tetrahydropentalene wie in EP 659 758 beschrieben oder π-Ligand substituierte Tetrahydroindene wie in EP 661 300 beschrieben.
Außerdem können Organometallverbindungen eingesetzt werden in denen der komplexierende Ligand kein Cyclopentadienyl-Liganden enthält. Beispiele hierfür sind Diamin-Komplexe der III. und IV. Nebengruppe des Periodensystems der Elemente, wie sie z.B. bei D.H. McConville, et al., Macromolecules, 1996, 29, 5241 und D.H. McConville, et al., J. Am. Chem. So., 1996, 118, 10008 beschrieben werden. Außerdem können Diimin-Komplexe der VIII. Nebengruppe des Periodensystems der Elemente (z.B. Ni²⁺ oder Pd²⁺ Komplexe), wie sie bei Brookhart et al., J. Am. Chem. So. 1995, 117, 6414 und, Brookhart et al., J. Am. Chem. So., 1996, 118, 267 beschrieben werden, eingesetzt weden. Ferner lassen sich 2,6-bis(imino)pyridyl-Komplexe der VIII. Nebengruppe des Periodensystems der Elemente (z.B. Co²⁺ oder Fe²⁺ Komplexe), wie sie bei Brookhart et al., J. Am. Chem. So. 1998, 120, 4049 und Gibson et al., Chem. Commun. 1998, 849 beschrieben werden, einsetzen.

Bevorzugte Metallocenverbindungen sind unverbrückte oder verbrückte Verbindungen der Formel II, 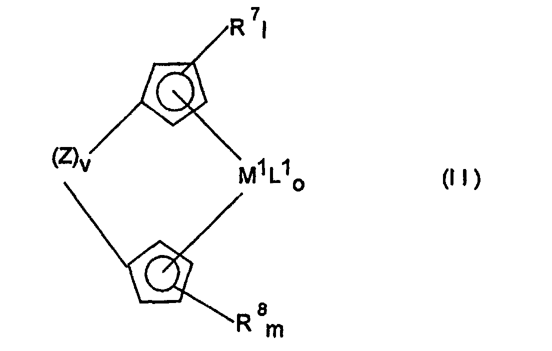 worin
- M¹: ein Metall der III., IV., V. oder VI. Nebengruppe des Periodensystems der Elemente ist, insbesondere Ti, Zr oder Hf,
- R⁷: gleich oder verschieden sind und ein Wasserstoffatom oder SiR₃¹²sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁷ sind eine C₁-C₃₀-kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁷ können so miteinander verbunden sein, daß die Reste R⁷ und die sie verbindenden Atome des Cyclopentadienylringes ein C₄-C₂₄-Ringsystem bilden, welches seinerseits substituiert sein kann,
- R⁸: gleich oder verschieden sind und ein Wasserstoffatom oder SiR₃¹² sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R⁸ sind eine C₁-C₃₀-kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist, oder zwei oder mehrere Reste R⁸ können so miteinander verbunden sein, daß die Reste R⁸ und die sie verbindenden Atome des Cyclopentadienylringes ein C₄-C₂₄-Ringsystem bilden, welches seinerseits substituiert sein kann,
- l: gleich 5 für v = 0, und I gleich 4 für v = 1 ist,
- m: gleich 5 für v = 0, und m gleich 4 für v = 1 ist,
- L¹: gleich oder verschieden sein können und ein Wasserstoffatom, eine C₁-C₁₀-Kohlenwasserstoffgruppe wie C₁-C₁₀-Alkyl oder C₆-C₁₀-Aryl, ein Halogenatom, oder OR⁹, SR⁹, OSiR₃⁹, SiR₃⁹, PR₂⁹ oder NR₂⁹bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen M²R¹⁰R¹¹, worin M² Kohlenstoff, Silizium, Germanium oder Zinn ist und R¹⁰ und R¹¹ gleich oder verschieden eine C₁-C₂₀kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R⁷ und/oder R⁸ ein mono- oder polycyclisches Ringsystem bilden.

Bevorzugt sind chirale verbrückte Metallocenverbindungen der Formel II, insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Chirale verbrückte Metallocenverbindungen der Formel II können als reine racemische oder reine meso Verbindungen eingesetzt werden. Es können aber auch Gemische aus einer racemischen Verbindung und einer meso Verbindung verwendet werden.

Beispiele für Metallocenverbindungen sind:
Dimethylsilandiylbis(indenyl)zirkoniumdichlorid
Dimethylsilandiylbis(4-naphthyl-indenyl)zirkoniumdichlorid
Dimethylsilandiylbis(2-methyl-benzo-indenyl)zirkoniumdichlorid
Dimethylsilandiylbis(2-methyl-indenyl)zirkoniumdichlorid
Dimethylsilandiylbis(2-methyl-4-(1-naphthyl)-indenyl)zirkoniumdichlorid
Dimethylsilandiylbis(2-methyl-4-(2-naphthyl)-indenyl)zirkoniumdichlorid
Dimethylsilandiylbis(2-methyl-4-phenyl-indenyl)zirkoniumdichlorid
Dimethylsilandiylbis(2-methyl-4-t-butyl-indenyl)zirkoniumdichlorid
Dimethylsilandiylbis(2-methyl-4-isopropyl-indenyl)zirkoniumdichlorid
Dimethylsilandiylbis(2-methyl-4-ethyl-indenyl)zirkoniumdichlorid
Dimethylsilandiylbis(2-methyl-4- -acenaphth-indenyl)zirkoniumdichlorid
Dimethylsilandiylbis(2,4-dimethyl-indenyl)zirkoniumdichlorid
Dimethylsilandiylbis(2-ethyl-indenyl)zirkoniumdichlorid
Dimethylsilandiylbis(2-ethyl-4-ethyl-indenyl)zirkoniumdichlorid
Dimethylsilandiylbis(2-ethyl-4-phenyl-indenyl)zirkoniumdichlorid
Dimethylsilandiybis(2-methyl-4,5-benzo-indenyl)zirkoniumdichlorid
Dimethylsilandiylbis(2-methyl-4,6 diisopropyl-indenyl)zirkoniumdichlorid
Dimethylsilandiylbis(2-methyl-4,5 diisopropyl-indenyl)zirkoniumdichlorid
Dimethylsilandiylbis(2,4,6-trimethyl-indenyl)zirkoniumdichlorid
Dimethylsilandiylbis(2,5,6-trimethyl-indenyl)zirkoniumdichlorid
Dimethylsilandiylbis(2,4,7-trimethyl-indenyl)zirkoniumdichlorid
Dimethylsilandiylbis(2-methyl-5-isobutyl-indenyl)zirkoniumdichlorid
Dimethylsilandiylbis(2-methyl-5-t-butyl-indenyl)zirkoniumdichlorid
Methyl(phenyl)silandiylbis(2-methyl-4-phenyl-indenyl)zirkoniumdichlorid
Methyl(phenyl)silandiylbis(2-methyl-4,6 diisopropyl-indenyl)zirkoniumdichlorid
Methyl(phenyl)silandiylbis(2-methyl-4-isopropyl-indenyl)zirkoniumdichlorid
Methyl(phenyl)silandiylbis(2-methyl-4,5-benzo-indenyl)zirkoniumdichlorid
Methyl(phenyl)silandiylbis(2-methyl-4,5-(methylbenzo)-indenyl)zirkoniumdi-chlorid
Methyl(phenyl)silandiylbis(2-methyl-4,5-(tetramethylbenzo)-indenyl)zirkoniumdichlorid
Methyl(phenyl)silandiylbis(2-methyl-4- -acenaphth-indenyl)zirkoniumdichlorid
Methyl(phenyl)silandiylbis(2-methyl-indenyl)zirkoniumdichlorid
Methyl(phenyl)silandiylbis(2-methyl-5-isobutyl-indenyl)zirkoniumdichlorid
1,2-Ethandiylbis(2-methyl-4-phenyl-indenyl)zirkoniumdichlorid
1,4-Butandiylbis(2-methyl-4-phenyl-indenyl)zirkoniumdichlorid
1,2-Ethandiylbis(2-methyl-4,6 diisopropyl-indenyl)zirkoniumdichlorid
1,4-Butandiylbis(2-methyl-4-isopropyl-indenyl)zirkoniumdichlorid
1,4-Butandiylbis(2-methyl-4,5-benzo-indenyl)zirkoniumdichlorid
1,2-Ethandiylbis(2-methyl-4,5-benzo-indenyl)zirkoniumdichlorid
1,2-Ethandiylbis(2,4,7-trimethyl-indenyl)zirkoniumdichlorid
1,2-Ethandiylbis(2-methyl-indenyl)zirkoniumdichlorid
1,4-Butandiylbis(2-methyl-indenyl)zirkoniumdichlorid
[4-(η⁵-Cyclopentadienyl)-4,6,6-trimethyl-(η⁵-4,5-tetrahydropentalen)]-dichlorozirconium
[4-(η⁵-3'-Trimethylsilyl-cyclopentadienyl)-4,6,6-trimethyl-(η⁵-4,5-tetrahydropentalen)]-dichlorozirconium
[4-(η⁵-3'-Isopropyl-cyclopentadienyl)-4,6,6-trimethyl-(η⁵-4,5-tetrahydropentalen)]-dichlorozirconium
[4-(η⁵-Cyclopentadienyl)-4,7,7-trimethyl-(η⁵-4,5,6,7-tetrahydroindenyl)]-dichlorotitan
[4-(η⁵-Cyclopentadienyl)-4,7,7-trimethyl-(η⁵-4,5,6,7-tetrahydroindenyl)]-dichlorozirkonium
[4-(η⁵-Cyclopentadienyl)-4,7,7-trimethyl-(η⁵-4,5,6,7-tetrahydroindenyl)]-dichlorohafnium
[4-(η⁵-3'-tert.Butyl-cyclopentadienyl)-4,7,7-trimethyl-(η⁵-4,5,6,7-tetrahydroindenyl)]-dichlorotitan
4-(η⁵-3'-Isopropylcyclopentadienyl)-4,7,7-trimethyl-(η⁵-4,5,6,7-tetrahydroindenyl)]-dichlorotitan
4-(η⁵-3'-Methylcyclopentadienyl)-4,7,7-trimethyl-(η⁵-4,5,6,7-tetrahydroindenyl)]-dichlorotitan
4-(η⁵-3'-Trimethylsilyl-cyclopentadienyl)-2-trimethylsilyl-4,7,7-trimethyl-(η⁵-4,5,6,7-tetrahydroindenyl)]-dichlorotitan
4-(η⁵-3'-tert.Butyl-cyclopentadienyl)-4,7,7-trimethyl-(η⁵-4,5,6,7-tetrahydroindenyl)]-dichlorozirkonium
(Tertbutylamido)-(tetramethyl-η⁶-cyclopentadienyl)-dimethylsilyl-dichlorotitan
(Tertbutylamido)-(tetramethyl-η⁵-cyclopentadienyl)-1,2-ethandiyl-dichlorotitandichlorotitan
(Methylamido)-(tetramethyl-η⁵-cyclopentadienyl)-dimethylsilyl-dichlorotitan
(Methylamido)-(tetramethyl-η⁵-cyclopentadienyl)-1,2-ethandiyl-dichlorotitan
(Tertbutylamido)-(2,4-dimethyl-2,4-pentadien-1-yl)-dimethylsilyl-dichlorotitan
Bis-(cyclopentadienyl)-zirkoniumdichlorid
Bis-(n-butylcyclopentadienyl)-zirkoniumdichlorid
Bis-(1,3-dimethylcyclopentadienyl)-zirkoniumdichlorid
Tetrachloro-[1-[bis(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[bis(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]dizirkonium
Tetrachloro-[1-[bis(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilandiylbis(2-methyl-4-(tert-butyl-phenyl-indenyl)-zirkoniumdichlorid
Dimethylsilandiylbis(2-methyl-4-(4-methyl-phenyl-indenyl)zirkoniumdichlorid
Dimethylsilandiylbis(2-methyl-4-(4-ethyl-phenyl-indenyl)zirkoniumdichlorid
Dimethylsilandiylbis(2-methyl-4-(4-trifluormethyl-phenyl-indenyl)zirkoniumdichlorid
Dimethylsilandiylbis(2-methyl-4-(4-methoxy-phenyl-indenyl)zirkoniumdichlorid
Dimethylsilandiylbis(2-ethyl-4-(4-tert-butyl-phenyl-indenyl)zirkoniumdichlorid
Dimethylsilandiylbis(2-ethyl-4-(4-methyl-phenyl-indenyl)zirkoniumdichlorid
Dimethylsilandiylbis(2-ethyl-4-(4-ethyl-phenyl-indenyl)zirkoniumdichlorid
Dimethylsilandiylbis(2-ethyl-4-(4-trifluormethyl-phenyl-indenyl)zirkoniumdichlorid
Dimethylsilandiylbis(2-ethyl-4-(4-methoxy-phenyl-indenyl)zirkoniumdichlorid
Dimethylsilandiylbis(2-methyl-4-(4-tert-butyl-phenyl-indenyl)zirkoniumdimethyl
Dimethylsilandiylbis(2-methyl-4-(4-methyl-phenyl-indenyl)zirkoniumdimethyl
Dimethylsilandiylbis(2-methyl-4-(4-ethyl-phenyl-indenyl)zirkoniumdimethyl
Dimethylsilandiylbis(2-methyl-4-(4-trifluomethyl-phenyl-indenyl)zirkoniumdimethyl
Dimethylsilandiylbis(2-methyl-4-(4-methoxy-phenyl-indenyl)zirkoniumdimethyl
Dimethylsilandiylbis(2-ethyl-4-(4-tert-butyl-phenyl-indenyl)zirkoniumdimethyl
Dimethylsilandiylbis(2-ethyl-4-(4-methyl-phenyl-indenyl)zirkoniumdimethyl
Dimethylsilandiylbis(2-ethyl-4-(4-ethyl-phenyl-indenyl)zirkoniumdiethyl
Dimethylsilandiylbis(2-ethyl-4-(4-trifluormethyl-phenyl-indenyl)zirkoniumdimethyl
Dimethylsilandiylbis(2-ethyl-4-(4-methoxy-phenyl-indenyl)zirkoniumdimethyl
Dimethylsilandiylbis(2-methyl-4-(4'-tert.-butyl-phenyl)-indenyl)hafnuimdichlorid
Dimethylsilandiylbis(2-methyl-4-(4'-tert.-butyl-phenyl)-indenyl)titandichlorid
Dimethylsilandiylbis(2-methyl-4-(4'-n-propyl-phenyl)-indenyl)zirkoniumdichlorid
Dimethylsilandiylbis(2-methyl-4-(4'-iso-propyl-phenyl)-indenyl)zirkoniumdichlorid
Dimethylsilandiylbis(2-methyl-4-(4'-n-butyl-phenyl)-indenyl)zirkoniumdichlorid
Dimethylsilandiylbis(2-methyl-4-(4'-hexyl-phenyl)-indenyl)zirkoniumdichlorid
Dimethylsilandiylbis(2-methyl-4-(4'-sec-butyl-phenyl)-indenyl)zirkoniumdichlorid
Dimethylsilandiylbis(2-ethyl-4-(4'-n-propyl-phenyl)-indenyl)zirkoniumdichlorid
Dimethylsilandiylbis(2-ethyl-4-(4'-iso-propyl-phenyl)-indenyl)zirkoniumdichlorid
Dimethylsilandiylbis(2-ethyl-4-(4'-n-butyl-phenyl)-indenyl)zirkoniumdichlorid
Dimethylsilandiylbis(2-ethyl-4-(4'-hexyl-phenyl)-indenyl)zirkoniumdichlorid
Dimethylsilandiylbis(2-ethyl-4-(4'-pentyl-phenyl)-indenyl)zirkoniumdichlorid
Dimethylsilandiylbis(2-ethyl-4-(4'-cyclohexyl-phenyl)-indenyl)zirkoniumdichlorid
Dimethylsilandiylbis(2-ethyl-4-(4'-sec-butyl-phenyl)-indenyl)zirkoniumdichlorid
Dimethylsilandiylbis(2-n-propyl-4-phenyl)-indenyl)zirkoniumdichlorid
Dimethylsilandiylbis(2-n-propyl-4-(4'-methyl-phenyl)-indenyl)zirkoniumdichlorid
Dimethylsilandiylbis(2-n-propyl-4-(4'-ethyl-phenyl)-indenyl)zirkoniumdichlorid
Dimethylsilandiylbis(2-n-propyl-4-(4'-n-propyl-phenyl)-indenyl)zirkoniumdichlorid
Dimethylsilandiylbis(2-n-propyl-4-(4'-iso-propyl-phenyl)-indenyl)zirkoniumdichlorid
Dimethylsilandiylbis(2-n-propyl-4-(4'-n-butyl-phenyl)-indenyl)zirkoniumdichlorid
Dimethylsilandiylbis(2-n-propyl-4-(4'-hexyl-phenyl)-indenyl)zirkoniumdichlorid
Dimethylsilandiylbis(2-n-propyl-4-(4'-cyclohexyl-phenyl)-indenyl)zirkoniumdichlorid
Dimethylsilandiylbis(2-n-propyl-4-(4'-sec-butyl-phenyl)-indenyl)zirkoniumdichlorid
Dimethylsilandiylbis(2-n-propyl-4-(4'-tert.-butyl-phenyl)-indenyl)zirkoniumdichlorid
Dimethylsilandiylbis(2-n-butyl-4-phenyl)-indenyl)zirkoniumdichlorid
Dimethylsilandiylbis(2-n-butyl-4-(4'-methyl-phenyl)-indenyl)zirkoniumdichlorid
Dimethylsilandiylbis(2-n-butyl-4-(4'-ethyl-phenyl)-indenyl)zirkoniumdichlorid
Dimethylsilandiylbis(2-n-butyl-4-(4'-n-propyl-phenyl)-indenyl)zirkoniumdichlorid
Dimethylsilandiylbis(2-n-butyl-4-(4'-iso-propyl-phenyl)-indenyl)zirkoniumdichlorid
Dimethylsilandiylbis(2-n-butyl-4-(4'-n-butyl-phenyl)-indenyl)zirkoniumdichlorid
Dimethylsilandiylbis(2-n-butyl-4-(4'-hexyl-phenyl)-indenyl)zirkoniumdichlorid
Dimethylsilandiylbis(2-n-butyl-4-(4'-cyclohexyl-phenyl)-indenyl)zirkoniumdichlorid
Dimethylsilandiylbis(2-n-butyl-4-(4'-sec-butyl-phenyl)-indenyl)zirkoniumdichlorid
Dimethylsilandiylbis(2-n-butyl-4-(4'-tert.-butyl-phenyl)-indenyl)zirkoniumdichlorid
Dimethylsilandiylbis(2-hexyl-4-phenyl)-indenyl)zirkoniumdichlorid
Dimethylsilandiylbis(2-hexyl-4-(4'-methyl-phenyl)-indenyl)zirkoniumdichlorid
Dimethylsilandiylbis(2-hexyl-4-(4'-ethyl-phenyl)-indenyl)zirkoniumdichlorid
Dimethylsilandiylbis(2-hexyl-4-(4'-n-propyl-phenyl)-indenyl)zirkoniumdichlorid
Dimethylsilandiylbis(2-hexyl-4-(4'-iso-propyl-phenyl)-indenyl)zirkoniumdichlorid
Dimethylsilandiylbis(2-hexyl-4-(4'-n-butyl-phenyl)-indenyl)zirkoniumdichlorid
Dimethylsilandiylbis(2-hexyl-4-(4'-hexyl-phenyl)-indenyl)zirkoniumdichlorid
Dimethylsilandiylbis(2-hexyl-4-(4'-cyclohexyl-phenyl)-indenyl)zirkoniumdichlorid
Dimethylsilandiylbis(2-hexyl-4-(4'-sec-butyl-phenyl)-indenyl)zirkoniumdichlorid
Dimethylsilandiylbis(2-hexyl-4-(4'-tert.-butyl-phenyl)-indenyl)zirkoniumdichlorid
Dimethylsilandiylbis(2-methyl-4-(4'-tert.-butyl-phenyl)-indenyl)zirkoniumbis(dimethylamid)
Dimethylsilandiylbis(2-ethyl-4-(4'-tert.-butyl-phenyl)-indenyl)zirkoniumdibenzyl
Dimethylsilandiylbis(2-methyl-4-(4'-tert.-butyl-phenyl)-indenyl)zirkoniumdimethyl
Dimethylgermandiylbis(2-ethyl-4-(4'-tert.-butyl-phenyl)-indenyl)zirkoniumdichlorid
Dimethylgermandiylbis(2-ethyl-4-(4'-tert.-butyl-phenyl)-indenyl)hafniumdichlorid
Dimethylgermandiylbis(2-propyl-4-(4'-tert.-butyl-phenyl)-indenyl)titandichlorid
Dimethylgermandiylbis(2-methyl-4-(4'-tert.-butyl-phenyl)-indenyl)zirkoniumdichlorid
Ethylidenbis(2-ethyl-4-phenyl)-indenyl)zirkoniumdichlorid
Ethylidenbis(2-ethyl-4-(4'-tert.-butyl-phenyl)-indenyl)zirkoniumdichlorid
Ethylidenbis(2-n-propyl-4-(4'-tert.-butyl-phenyl)-indenyl)zirkoniumdichlorid
Ethylidenbis(2-n-butyl-4-(4'-tert.-butyl-phenyl)-indenyl)titandichlorid
Ethylidenbis(2-hexyl-4-(4'-tert.-butyl-phenyl)-indenyl)zirkoniumdibenzyl
Ethylidenbis(2-ethyl-4-(4'-tert.-butyl-phenyl)-indenyl)hafniumdibenzyl
Ethylidenbis(2-methyl-4-(4'-tert.-butyl-phenyl)-indenyl)titandibenzyl
Ethylidenbis(2-methyl-4-(4'-tert.-butyl-phenyl)-indenyl)zirkoniumdichlorid
Ethylidenbis(2-ethyl-4-(4'-tert.-butyl-phenyl)-indenyl)hafniumdimethyl
Ethylidenbis(2-n-propyl-4-phenyl)-indenyl)titandimethyl
Ethylidenbis(2-ethyl-4-(4'-tert.-butyl-phenyl)-indenyl)zirkoniumbis(dimethylamid)
Ethylidenbis(2-ethyl-4-(4'-tert.-butyl-phenyl)-indenyl)hafniumbis(dimethylamid)
Ethylidenbis(2-ethyl-4-(4'-tert.-butyl-phenyl)-indenyl)titanbis(dimethylamid)
Methylethylidenbis(2-ethyl-4-(4'-tert.-butyl-phenyl)-indenyl)zirkoniumdichlorid
Methylethylidenbis(2-ethyl-4-(4'-tert.-butyl-phenyl)-indenyl)hafniumdichlorid
Phenylphosphandiyl(2-ethyl-4-(4'-tert.-butyl-phenyl)-indenyl)zirkoniumdichlorid
Phenylphosphandiyl(2-methyl-4-(4'-tert.-butyl-phenyl)-indenyl) zirkoniumdichlorid
Phenylphosphandiyl(2-ethyl-4-(4'-tert.-butyl-phenyl)-indenyl) zirkoniumdichlorid

Weiterhin bevorzugt sind die entsprechenden Zirkondimethyl-Verbindungen und die entsprechenden Zirkon-η⁴-Butadien-Verbindungen, sowie die entsprechenden Verbindungen mit 1,2-(1-methyl-ethandiyl)-, 1,2-(1,1-dimethyl-ethandiyl)- und 1,2-(1,2-dimethyl-ethandiyl)-Brücke.

Das erfindungsgemäße Katalysatorsystem enthält weiterhin eine Aluminiumverbindung C, die vorzugsweise ebenfalls der Formel V entspricht .

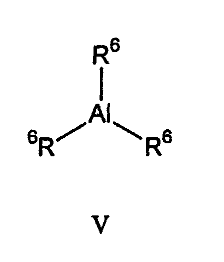

Die Reste R⁶ in Formel Vkönnen gleich oder verschieden sein und ein Halogenatom, ein Wasserstoffatom, eine C₁-C₄₀-kohlenstoffhaltige Gruppe wie C₁-C₂₀-Alkyl, C₁-C₂₀-Halogenalkyl, C₆-C₂₀-Aryl, C₆-C₂₀-Halogenaryl, C₇-C₄₀-Arylalkyl, C₇-C₄₀-Halogenarylalkyl, C₇-C₄₀-Alkylaryl oder C₇-C₄₀-Halogenalkylaryl bedeuten.
Bevorzugt für R⁶ sind C₁-C₆-Alkyl-Gruppen, besonders bevorzugt für R⁶ sind C₁-C₄-Alkyl-Gruppen.

Die Aluminiumverbindung kann dabei die gleiche sein wie die, welche zur Herstellung der cokatalytisch wirkenden Verbindung A verwendet wird, sie kann von dieser aber auch verschieden sein.

Bevorzugte Aluminiumverbindungen C sind
Trimethylaluminium
Triethylaluminium
Triisopropylaluminium
Trihexylaluminium
Trioctylaluminium
Tri-n-butylaluminium
Tri-n-propylaluminium
Triisoprenaluminium
Dimethylaluminiummonochlorid
Diethylaluminiummonochlorid
Diisobutylaluminiummonochlorid
Methylaluminiumsesquichlorid
Ethylaluminiumsesquichlorid
Dimethylaluminiumhydrid
Diethylaluminiumhydrid
Diisopropylaluminiumhydrid
Dimethylaluminium(trimethylsiloxid)
Dimethylaluminium(triethylsiloxid)
Phenylalan
Pentafluorphenylalan
o-Tolylalan
Besonders bevorzugt sind Trimethylaluminium, Triethylaluminium und
Triisobutylaluminium.

Das erfindungsgemäße Katalysatorsystem kann auf verschiedene Weise hergestellt werden. Die nachfolgende Erläuterung der Herstellung des erfindungsgemäßen Katalysatorsystems erfolgt beispielhaft anhand einer cokatalytisch wirkenden Verbindung der Formel I. Es können aber auch alle anderen chemischen Verbindungen A eingesetzt werden, die Einheiten gemäß Formel I enthalten. Folgende Herstellungsverfahren können z.B. angewendet werden:

Zur Herstellung des erfindungsgemäßen Katalysatorsystems kann ein Metallocen der Formel II mit einer Verbindung A und einer Aluminium-Verbindung der Formel V in jedem beliebigen stöchiometrischen Verhältnis umgesetzt werden. Als Lösemittel werden dabei aliphatischen oder aromatischen Lösemittel wie Toluol, Heptan, Tetrahydrofuran oder Diethylether eingesetzt. Es können auch Lösemittelgemische verwendet werden.
Eine mögliche Verfahrensweise ist, daß eine Verbindung der Formel II in einem aliphatischen oder aromatischen Lösemittel gelöst bzw. suspendiert wird. Im Anschluß daran wird eine Organoboraluminiumverbindung A entweder in Substanz oder in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Danach wird eine Verbindung der Formel V oder in gelöster bzw. in suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Alle Edukte können in jedem beliebigen, stöchiometrischen Verhältnis eingesetzt werden. Bevorzugt sind Umsetzungen in denen das stöchiometrische Verhältnis von Verbindungen der Formel II : Verbindungen A zwischen 1 : 0.1 und 1 : 200 liegt und von Verbindungen der Formel II : Verbindungen der Formel V zwischen 1 : 00.1 und 1 : 400 liegt. Besonders bevorzugt sind Umsetzungen in denen das stöchiometrische Verhältnis von Verbindungen der Formel II : Verbindungen A zwischen 1 : 1 und 1 : 20 liegt und von Verbindungen der Formel II : Verbindungen der Formel V zwischen 1 : 1 und 1 : 10 liegt. Die Reihenfolge der Zugabe der einzelnen Komponenten kann aber auch beliebig vertauscht sein, so daß z.B. zuerst eine Verbindung A, anschließend eine Verbindung der Formel V und dann eine Verbindung der Formel II zugegeben werden. Das erhaltene erfindungsgemäße Katalysatorsystem wird direkt in den Polymerisationsautoklav eingespritzt.

Die erfindungsgemäßen Katalysatorsysteme werden geträgert eingesetzt.

Bevorzugt enthält der Träger mindestens ein anorganisches Oxid, wie Siliziumoxid, Aluminiumoxid, Zeolithe, MgO, ZrO₂, TiO₂, B₂O₃, CaO, ZnO, ThO₂, Na₂CO₃, K₂CO₃, CaCO₃, MgCO₃, Na₂SO₄, Al₂(SO₄)₃, BaSO₄, KNO₃, Mg(NO₃)₂, Al(NO₃)₃ ,Na₂O, K₂O, oder Li₂O, insbesondere Siliziumoxid und/oder Aluminiumoxid. Der Träger kann auch mindestens ein Polymer enthalten, z.B. ein Homo- oder Copolymer,ein vernetztes Polymer oder Polymerblends. Beispiele für Polymere sind Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol.

Der Träger weist eine spezifische Oberfläche im Bereich von 10 bis 1000 m²/g, bevorzugt von 150 bis 500 m²/g auf. Die mittlere Partikelgröße des Trägers beträgt 1 bis 500 µm, bevorzugt 5 bis 350 µm, besonders bevorzugt 10 bis 200 µm.

Bevorzugt ist der Träger porös mit einem Porenvolumen des Trägers von 0,5 bis 4,0 ml/g, bevorzugt 1,0 bis 3,5 ml/g. Ein poröser Träger weist einen gewissen Anteil an Hohlräumen (Porenvolumen) auf. Die Form der Poren ist meist unregelmäßig, häufig sphärisch ausgebildet. Die Poren können durch kleine Porenöffnungen miteinander verbunden sein. Der Porendurchmesser beträgt vorzugsweise etwa 2 bis 50 nm. Die Partikelform des porösen Trägers ist abhängig von der Nachbehandlung und kann irregulär oder sphärisch sein. Die Teilchengröße des Trägers kann z. B. durch kryogene Mahlung und/oder Siebung beliebig eingestellt werden.

Erfindungsgemäße geträgerte Katalysatorsysteme sind durch verschiedene präparative Methoden erhältlich. Die nachfolgende näheren Erläuterungen erfolgen beispielhaft anhand cokatalytisch wirkender Verbindungen der Formel I. Es können aber auch alle anderen chemischen Verbindungen A eingesetzt werden, die Einheiten A enthalten. Folgende Herstellungsverfahren können z.B. angewendet werden:
Der Träger wird in einem aliphatischen oder aromatischen Lösemittel wie Toluol, Heptan, Tetrahydrofuran oder Diethylether vorgelegt. Anschließend wird eine Verbindung A entweder in Substanz oder in gelöster bzw. suspendierter Form zu dem Träger gegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 20 °C und 100 °C bevorzugt wird. im Anschluß daran wird eine Organometallübergangsverbindung der Formel II in Substanz oder in gelöster bzw. suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 20 °C und 100 °C bevorzugt wird. Danach erfolgt die Zugabe einer Organoaluminiumverbindung der Formel V entweder in Substanz oder in gelöster bzw. suspendierter Form zu dem Träger. Auch hier liegt die Reaktionszeit zwischen 1 Minute und 24 Stunden, wobei ebenfalls eine Reaktionszeit von 5 bis 120 Minuten bevorzugt wird. Die Reaktionstemperatur liegt zwischen -10 °C und + 200 °C, wobei eine Temperatur zwischen 20 °C und 100 °C bevorzugt wird. Alle Edukte können in jedem beliebigen, stöchiometrischen Verhältnis eingesetzt werden. Bevorzugt sind Umsetzungen in denen das stöchiometrische Verhältnis von Verbindungen der Formel II : Verbindungen A zwischen 1 : 0.1 und 1 : 200 liegt und von Verbindungen der Formel II : Verbindungen der Formel V zwischen 1 : 0.01 und 1 : 400 liegt. Besonders bevorzugt sind Umsetzungen in denen das stöchiometrische Verhältnis von Verbindungen der Formel II : Verbindungen A zwischen 1 : 1 und 1 : 20 liegt und von Verbindungen der Formel II : Verbindungen der Formel V zwischen 1 : 1 und 1 : 10 liegt. Die Reihenfolge der Zugabe der einzelnen Komponenten kann aber auch beliebig vertauscht sein, so daß z.B. zuerst eine Verbindung A, anschließend eine Verbindung der Formel V und dann eine Verbindung der Formel II zu dem Träger gegeben werden. Das geträgerte Katalysatorsystem kann direkt zur Polymerisation eingesetzt werden. Es kann aber auch nach Entfernen des Lösemittels resuspendiert zur Polymerisation eingesetzt werden.

Eine zweite Variante ist, daß das Katalysatorsystem in Lösung hergestellt wird und anschließend mit dem Träger umgesetzt wird. Dazu wird eine Organometallverbindung der Formel II in einem aliphatischen oder aromatischen Lösemittel wie Toluol, Heptan, Tetrahydrofuran oder Diethylether vorgelegt.
Anschließend wird eine Verbindung A entweder in Substanz oder in gelöster bzw. suspendierter Form zugegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Danach erfolgt die Zugabe einer Organoaluminiumverbindung der Formel V entweder in Substanz oder in gelöster bzw. suspendierter Form zu dem Träger. Auch hier liegt die Reaktionszeit zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Alle Edukte können in jedem beliebigen, stöchiometrischen Verhältnis eingesetzt werden. Bevorzugt sind Umsetzungen in denen das stöchiometrische Verhältnis von Verbindungen der Formel II : Verbindungen A zwischen 1 : 0.1 und 1 : 200 liegt und von Verbindungen der Formel II : Verbindungen der Formel V zwischen 1 : 0.01 und 1 : 400 liegt. Besonders bevorzugt sind Umsetzungen in denen das stöchiometrische Verhältnis von Verbindungen der Formel II : Verbindungen A zwischen 1 : 1 und 1 : 20 liegt und von Verbindungen der Formel II : Verbindungen der Formel V zwischen 1 : 1 und 1 : 10 liegt. Die Reihenfolge der Zugabe der einzelnen Komponenten kann aber auch hier beliebig vertauscht sein, so daß z.B. zuerst eine Verbindung A, anschließend eine Verbindung der Formel V und dann eine Verbindung der Formel II miteinander umgesetzt werden. Das so hergestellte Katalysatorsystem wird hiernach zu einem Träger, der in einem aliphatischen oder aromatischen Lösemittel wie Toluol, Heptan, Tetrahydrofuran oder Diethylether vorgelegt ist, gegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 0 °C und 50 °C bevorzugt wird. Das geträgerte Katalysatorsystem kann direkt zur Polymerisation eingesetzt werden. Es kann aber auch nach Entfernen des Lösemittels resuspendiert zur Polymerisation eingesetzt werden.
In einer dritten Variante wird der Träger in einem aliphatischen oder aromatischen Lösemittel wie Toluol, Heptan, Tetrahydrofuran oder Diethylether vorgelegt. Im Anschluß daran wird eine Verbindung der Formel V entweder in Substanz oder in gelöster bzw. suspendierter Form zu dem Träger gegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 20 °C und 100 °C bevorzugt wird. Danach wird eine Verbindung der Formel III oder IV entweder in Substanz oder in gelöster bzw. suspendierter Form zugegeben. Die Reaktionszeit liegt zwischen 1 Minute und 48 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird.
Anschließend kann nochmals eine Verbindung der Formel V entweder in Substanz oder in gelöster bzw. suspendierter Form zum Reaktionsgemisch gegeben werden. Eine Verbindung der Formel III oder IV kann in jedem beliebigen stöchiometrischen Verhältnis mit einer Verbindunge der Formel V umgesetzt werden. Bevorzugt ist die Menge von 2 bis 6 Äquivalenten einer Verbindung der Formel V bezogen auf 1 Äquvalent einer Verbindung der Formel III oder IV. Besonders bevorzugt ist die Menge von 2 bis 2.5 Äquivalenten einer Verbindung der Formel V bezogen auf 1 Äquvalent einer Verbindung der Formel III oder IV. Der modifizierte Träger kann direkt weiter eingesetzt werden. Er kann aber auch nach Entfernen des Lösemittels resuspendiert werden.
Im Anschluß daran wird eine Organometallübergangsverbindung der Formel II in Substanz oder in gelöster bzw. suspendierter Form zu dem modifizeirtem Träger gegeben. Die Reaktionszeit liegt zwischen 1 Minute und 24 Stunden. Die Reaktionstemperatur liegt zwischen -10 °C und + 200 °C, wobei eine Temperatur zwischen 20 °C und 100 °C bevorzugt wird. Danach erfolgt die Zugabe einer Organoaluminiumverbindung der Formel V entweder in Substanz oder in gelöster bzw. suspendierter Form zu dem Träger. Auch hier liegt die Reaktionszeit zwischen 1 Minute und 24 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird. Das geträgerte Katalysatorsystem kann direkt zur Polymerisation eingesetzt werden. Es kann aber auch nach Entfernen des Lösemittels resuspendiert zur Polymerisation eingesetzt werden.

In einer vierten Variante wird der Träger in einem aliphatischen oder aromatischen Lösemittel wie Toluol, Heptan, Tetrahydrofuran oder Diethylether vorgelegt. Im Anschluß daran wird eine Verbindung der Formel II entweder in Substanz oder in gelöster bzw. suspendierter Form zu dem Träger gegeben. Die Reaktionszeit liegt zwischen 1 Minute und 24 Stunden, wobei eine Reaktionszeit zwischen 5 Minuten und 120 Minuten bevorzugt wird. Die Reaktionstemperatur liegt zwischen -10 °C und + 200 °C, wobei eine Temperatur zwischen 20 °C und 50 °C bevorzugt wird. Danach wird eine Verbindung der Formel V entweder in Substanz oder in gelöster bzw. suspendierter Form zugegeben. Die Reaktionszeit liegt zwischen 1 Minute und 48 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird. Die Edukte können in jedem beliebigen stöchiometrischen Verhältnis eingesetzt werden. Bevorzugt sind Umsetzungen in denen das stöchiometrische Verhältnis von Verbindungen der Formel II : Verbindungen der Formel V zwischen 1 : 0 und 1 : 400 liegt. Besonders bevorzugt sind Umsetzungen in denen das stöchiometrische Verhältnis von Verbindungen der Formel II : Verbindungen der Formel V zwischen 1 : 1 und 1 : 100 liegt. Die Reihenfolge der Zugabe der einzelnen Komponenten kann aber auch vertauscht sein, so daß zuerst eine Verbindung der Formel V und dann eine Verbindung der Formel II zu dem Träger gegeben werden. Nach dem Aufbringen der Mischung auf den Träger wird das Lösemittel entfernt und der Feststoff getrocknet. Dieser Feststoff kann in einem weiteren Verfahrensschritt zu einem beliebigen Zeitpunkt durch Umsetzung mit einer cokatalytisch wirkenden Organoboraluminiumverbindung A in ein polymerisationsaktives Katalysatorsystem verwandelt werden. Dazu wird der modifizierte Träger in einem aliphatischen oder aromatischen Lösemittel wie Toluol, Heptan, Tetrahydrofuran oder Diethylether resuspendiert. Im Anschluß daran wird eine Verbindung A in Substanz oder in gelöster bzw. suspendierter Form zu dem modifiziertem Träger gegeben. Die Reaktionszeit liegt zwischen 1 Minute und 48 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird. Alle Edukte können in jedem beliebigen stöchiometrischen Verhältnis eingesetzt werden. Bevorzugt sind Umsetzungen in denen das stöchiometrische Verhältnis von Verbindung Formel II : Verbindung A zwischen 1 : 0.1 und 1 : 200 liegt. Besonders bevorzugt sind Umsetzungen in denen das stöchiometrische Verhältnis von Verbindung Formel II : Verbindung A zwischen 1 : 1 und 1 : 20 liegt. Das geträgerte Katalysatorsystem kann direkt zur Polymerisation eingesetzt werden. Es kann aber auch nach Entfernen des Lösemittels resuspendiert zur Polymerisation eingesetzt werden.
In einer fünften Variante wird der Träger in einem aliphatischen oder aromatischen Lösemittel wie Toluol, Heptan, Tetrahydrofuran oder Diethylether vorgelegt. Im Anschluß daran wird eine Verbindung A entweder in Substanz oder in gelöster bzw. suspendierter Form zu dem Träger gegeben. Die Reaktionszeit liegt zwischen 1 Minute und 48 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird. Danach wird eine Verbindung der Formel V entweder in Substanz oder in gelöster bzw. suspendierter Form zugegeben. Die Reaktionszeit liegt zwischen 1 Minute und 48 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird. Die Edukte können in jedem beliebigen stöchiometrischen Verhältnis eingesetzt werden. Bevorzugt sind Umsetzungen in denen das stöchiometrische Verhältnis von Verbindungen A: Verbindungen der Formel V zwischen 1 : 0 und 1 : 400 liegt. Besonders bevorzugt sind Umsetzungen in denen das stöchiometrische Verhältnis von Verebindungen der Formel II : Verbindungen der Formel V zwischen 1 : 1 und 1 : 100 liegt. Die Reihenfolge der Zugabe der einzelnen Komponenten kann aber auch vertauscht sein, so daß zuerst eine Verbindung der Formel V und dann eine Verbindung A zu dem Träger gegeben werden. Nach dem Aufbringen der Mischung auf den Träger wird das Lösemittel entfernt und der Feststoff getrocknet. Dieser Feststoff kann in einem weiteren Verfahrensschritt zu einem beliebigen Zeitpunkt durch Umsetzung mit einer Organometallübergangsverbindung der Formel II in ein polymerisationsaktives Katalysatorsystem verwandelt werden. Dazu wird der modifizierte Träger in einem aliphatischen oder aromatischen Lösemittel wie Toluol, Heptan, Tetrahydrofuran oder Diethylether resuspendiert. Im Anschluß daran wird eine Verbindung der Formel II in Substanz oder in gelöster bzw. suspendierter Form zu dem modifiziertem Träger gegeben. Die Reaktionszeit liegt zwischen 1 Minute und 48 Stunden, wobei eine Reaktionszeit zwischen 5 Minuten und 12 Stunden bevorzugt wird. Die Reaktionstemperatur liegt zwischen -10 °C und + 200 °C, wobei eine Temperatur zwischen 20 °C und 100 °C bevorzugt wird. Alle Edukte können in jedem beliebigen stöchiometrischen Verhältnis eingesetzt werden. Bevorzugt sind Umsetzungen in denen das stöchiometrische Verhältnis von Verbindungen der Formel II : Verbindungen A zwischen 1 : 0.1 und 1 : 200 liegt. Besonders bevorzugt sind Umsetzungen in denen das stöchiometrische Verhältnis von Verbindungen der Formel II : Verbindungen A zwischen 1 : 1 und 1 : 20 liegt. Das geträgerte Katalysatorsystem kann direkt zur Polymerisation eingesetzt werden. Es kann aber auch nach Entfernen des Lösemittels resuspendiert zur Polymerisation eingesetzt werden.

Zudem wird ein Verfahren zur Herstellung eines Olefinpolymers durch Polymerisation eines oder mehrerer Olefine in Gegenwart des erfindungsgemäßen Katalysatorsystems beschrieben. Die Polymerisation kann eine Homo- oder eine Copolymerisation sein.

Bevorzugt werden Olefine der Formel R^{α} -CH=CH-R^{β} polymerisiert, worin R^{α} und R^{β} gleich oder verschieden sind und ein Wasserstoffatom, ein Halogenatom, eine Alkoxy-, Hydroxy-, Alkylhydroxy-, Aldehyd, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäureoder Carbonsäureestergruppe substituiert sein kann, oder R und R mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbomen, Diene wie 1,3-Butadien oder 1,4-Hexadien, Biscyclopentadien oder Methacrylsäuremethylester.

Insbesondere werden Propylen oder Ethylen homopolymerisiert oder Ethylen wird mit einem oder mehreren C₃-C₂₀-α-Olefinen, insbesondere Propylen, und /oder einem oder mehreren C₄-C₂₀-Dienen, insbesondere 1,3-Butadien, copolymerisiert oder Ethylen mit einem oder mehreren Cycloolefinen wie Norbornen copolymerisiert.

Die Polymerisation wird bevorzugt bei einer Temperatur von -60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischem Medium durchgeführt werden.

Das geträgerte System kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysatorsystems kann eine Vorpolymerisation erfolgen. Zur Vorpolymerisation wird bevorzugt das (oder eines der) in der Polymerisation eingesetzte(n) Olefin(e) verwendet.
Zur Herstellung von Olefinpolymeren mit breiter Molekulargewichtsverteilung werden bevorzugt Katalysatorsysteme verwendet, die zwei oder mehr verschiedene Übergangsmetallverbindungen, z.B. Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen oder das Olefin wird vor der Zugabe in das Polymerisationssystem mit der Al-Verbindung in Kontakt gebracht und anschließend wieder getrennt.

Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.
Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Geeignete Lösemittel zur Darstellung sowohl der erfindungsgemäßen geträgerten chemischen Verbindung als auch des erfindungsgemäßen Katalysatorsystems sind aliphatische oder aromatische Lösemittel, wie beispielsweise Hexan oder Toluol, etherische Lösemittel, wie beispielsweise Terahydrofuran oder Diethylether oder halogenierte Kohlenwasserstoffe, wie beispielsweise Methylenchlorid oder halogenierte aromatische Kohlenwasserstoffe wie beispielsweise o-Dichlorbenzol.

Vor Zugabe des Katalysatorsystems kann zum Polymerisationssystem zusätzlich eine andere Alkylaluminiumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 0,1 mmol Al pro kg Reaktorinhalt eingesetzt. Dadurch kann bei der Synthese eines geträgerten Katalysatorsystems das molare Al/M-Verhältnis klein gewählt werden.

Weiterhin kann bei dem erfindungsgemäßen Verfahren ein Additiv wie ein Antistatikum verwendet werden z.B. zur Verbesserung der Kommorphologie des Olefinpolymers. Generell können alle Antistatika, die für die Polymerisation geeignet sind, verwendet werden. Beispiele hierfür sind Salzgemische aus Calciumsalzen der Medialansäure und Chromsalze der N-Stearylanthranilsäure, die in DE-A-3543360 beschrieben werden. Weitere geeignete Antistatika sind z.B. C₁₂- bis C₂₂-Fettsäureseifen von Alkali- oder Erdalkalimetallen, Salze von Sulfonsäureestern, Ester von Polyethylenglycolen mit Fettsäuren, Polyoxyethylenalkylether usw. Eine Übersicht über Antistatika wird in EP-A 107127 angegeben.

Außerdem kann als Antistatikum eine Mischung aus einem Metallsalz der Medialansäure, einem Metallsalz der Anthranilsäure und einem Polyamin eingesetzt werden, wie in EP-A 636636 beschrieben.

Kommerziell erhältliche Produkte wie Stadis⁷ 450 der Fa. DuPont, eine Mischung aus Toluol, Isopropanol, Dodecylbenzolsulfonsäure, einem Polyamin, einem Copolymer aus Dec-1-en und SO₂ sowie Dec-1-en oder ASA⁷-3 der Fa. Shell und ARU5R⁷ 163 der Firma ICI Können ebenfalls verwendet werden.

Vorzugsweise wird das Antistatikum als Lösung eingesetzt, im bevorzugten Fall von Stadis⁷ 450 werden bevorzugt 1 bis 50 Gew.-% dieser Lösung, vorzugsweise 5 bis 25 Gew.-%, bezogen auf die Masse des eingesetzten Trägerkatalysators (Träger mit kovalent fixierter metalloceniumbildende Verbindung und eine oder mehrere Metallocenverbindungen z.B. der Formel IV) eingesetzt. Die benötigten Mengen an Antistatikum können jedoch, je nach Art des eingesetzten Antistatikums, in weiten Bereichen schwanken.

Die nachfolgenden Beispiele dienen zur näheren Erläuterung der Erfindung.

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert.

Die Herstellung der Pentafluorphenylboronsäure (R.D. Chambers et al., J. Chem. Soc., 1965, 3933) erfolgte nach Literaturvorschrift.

### 1. Beispiel: Synthese von Bis(dimethylalumoxy)pentafluorphenylboran

10 ml Trimethylaluminium (2M in Toluol, 20 mmol) werden in 40 ml Toluol vorgelegt. Bei -40°C werden zu dieser Lösung 2,1 g Pentafluorphenylboronsäure (10 mmol) in 50 ml Toluol über 15 Minuten zugetropft. Es wird 1 Stunde bei -40°C gerührt und anschließend eine weitere Stunde bei Raumtemperatur. Die leicht trübe, hellgelbe Lösung wird über eine G4-Fritte filtriert . Es resultiert eine klare, hellgelbe Lösung (0.1 M bezogen auf Bor) von Bis(dimethylalumoxy)pentafluorphenylboran in Toluol.

### 2. Beispiel: Herstellung des Katalysatorsystems

Zu einer Lösung von 53 mg (90 µmol) Dimethylsilandiylbis(2-methyl-4-phenylindenyl)-zirkoniumdimethyl in 10.75 ml Toluol werden 9 ml der im Beispiel 1 hergestellten Stammlösung an Co-Katalysator zugegeben. Anschließend werden 0.25 ml Trimethylaluminium (2M in Toluol) zugespritzt und danach wird 1 Stunde bei Raumtemperatur nachgerührt. Zum Einschleusen in das Polymerisationssystem werden 0.5 ml der hergestellten Stammlösung eingesetzt.

### 3. Beispiel (Vergleich: Polymerisation

Ein 300 ml Polymerisationsautoklav (Parr 4560) wird unter Argonatmosphäre mit 150 ml Heptan befüllt. Anschließend werden 1.1 ml TIBA (20% ig) zudosiert und 20 Minuten bei 20°C gerührt. Danach wird der Reaktor auf 50°C aufgeheizt und 0.5 ml der unter Beispiel 2 hergestellten Katalysatorlösung werden eingespritzt. Anschließend wird ein Ethylendruck von 10 bar aufgepreßt und es wird eine Stunde bei gleichbleibenden Ethylendruck polymerisiert. Es resultieren 11.7 g PolyethylenPulver. Die Katalysatoraktivität betrug 8.9 kg PE/g Metallocen x h.

### Beispiel 4

5 g SiO2 (PQ MS 3030, vorbehandelt bei 140°C, 10 h, 10 mbar) wurden unter Rühren mit 10 ml 20%iger Trimethylaluminiumlösung in Varsol versetzt. Nach 20 Minuten Rühren wurde die Suspension filtriert und der Rückstand dreimal mit 30 ml Toluol gewaschen. Der Rückstand wurde dann mit 100 ml Bis(dimethylalumoxy)pentafluorphenylboran-Lösung analog Beispiel 1 versetzt. Man ließ 1 Stunde rühren und entfernte dann das Lösemittel im Ölpumpenvakuum. Zu dem getrockneten geträgerten Cokatalysator wurden dann 55 mg Dimethylsilandiylbis(2-methyl-4-phenyl-indenyl)-zirkoniumdimethyl gelöst in Toluol getropft. Man ließ 30 Minuten rühren und entfernte dann das Lösemittel im Ölpumpenvakuum. Man erhielt 11g geträgerten Katalysator als freifließendes Pulver.

Parallel dazu wurde ein trockener 16-dm³-Reaktor zunächst mit Stickstoff und anschließend mit Propylen gespült und mit 10 dm³ flüssigem Propylen befüllt. Dann wurden 0,5 cm³ einer 20 %igen Triisobutylaluminiumlösung in Varsol mit 30 cm³ Heptan verdünnt in den Reaktor gegeben und der Ansatz bei 30°C 15 Minuten gerührt.
Anschließend wurden 1,5 g des geträgerten Katalysators in 30 ml Heptan resuspendiert und in den Reaktor gegeben. Das Reaktionsgemisch wurde auf die Polymerisationstemperatur von 60°C aufgeheizt (4°C/min) und das Polymerisationssystem 1 h durch Kühlung bei 60°C gehalten.
Gestoppt wurde die Polymerisation durch Abgasen des restlichen Propylens. Das Polymer wurde im Vakuumtrockenschrank getrocknet.
Es resultieren 0,9 kg Polypropylen-Pulver. Der Reaktor zeigte keine Beläge an Innenwand oder Rührer. Die Katalysatoraktivität betrug 70 kg PP/g Metallocen x h.

## Patentansprüche

1. Katalysatorsystem, enthaltend a) mindestens eine cokatalytisch wirkende chemische Verbindung A, b) mindestens ein Metallocen B und c) mindestens eine Aluminiumverbindung C, worin die chemische Verbindung A eine Organoboraluminiumverbindung ist, die Einheiten der Formel I enthält 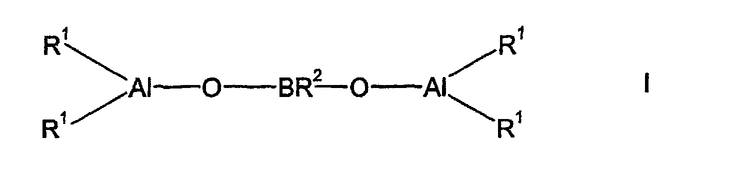 worin R¹ gleich oder verschieden sind und ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind oder R¹ kann eine OSiR₃³-Gruppe sein, worin R³ gleich oder verschieden sind und ein Wasserstoffatom, ein Halogenatom, eine C₁-C₄₀-kohlenstoffhaltige Gruppe wie C₁-C₂₀-Alkyl, C₁-C₂₀-Halogenalkyl, C₁-C₁₀-Alkoxy, C₆-C₂₀-Aryl, C₆-C₂₀-Halogenaryl, C₆-C₂₀-Aryloxy, C₇-C₄₀-Arylalkyl, C₇-C₄₀-Halogenarylalkyl, C₇-C₄₀-Alkylaryl, C₇-C₄₀-Halogenalkylaryl sind, R² ist ein Halogenatom, C₁-C₂₀-Halogenalkyl, C₆-C₂₀-Halogenaryl, C₇-C₄₀-Halogenarylalkyl, C₇-C₄₀-Halogenalkylaryl oder R² kann eine OSiR₃³-Gruppe sein, worin R³ gleich oder verschieden sind und ein Halogenatom, C₁-C₂₀-Halogenalkyl, C₆-C₂₀-Halogenaryl, C₇-C₄₀-Halogenarylalkyl, C₇-C₄₀-Halogenalkylaryl sind,
und zusätzlich enthaltend einen Träger.

2. Verfahren zur Herstellung eines Polyolefins durch Polymerisation eines oder mehrerer Olefine, in Gegenwart eines Katalysatorsystems gemäß Anspruch 1.

3. Verwendung eines Katalysatorsytems gemäß Anspruch 1 zur Herstellung eines Polyolefins.

## Claims

1. A catalyst system comprising a) at least one cocatalytically active chemical compound A, b) at least one metallocene B and c) at least one aluminum compound C, wherein the chemical compound A is an organoboron-aluminum compound comprising units of the formula I 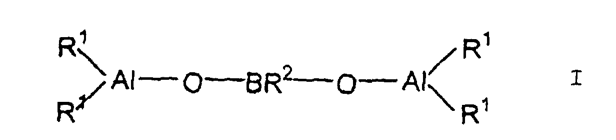 where R¹ are identical or different and are each a hydrogen atom, a halogen atom, a C₁-C₄₀-group such as C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl or R¹ can be an OSiR₃³ group, where R³ are identical or different and are each a hydrogen atom, a halogen atom, a C₁-C₄₀-group such as C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl or C₇-C₄₀-haloalkylaryl,
R² is a halogen atom, C₁-C₂₀-haloalkyl, C₆-C₂₀-haloaryl, C₇-C₄₀-haloarylalkyl or C₇-C₄₀-haloalkylaryl or R² can be an OSiR₃³ group, where R³ are identical or different and are each a halogen atom, C₁-C₂₀-haloalkyl, C₆-C₂₀-haloaryl, C₇-C₄₀-haloarylalkyl or C₇-C₄₀-haloalkylaryl,
and further comprising a support.

2. A process for preparing a polyolefin by polymerization of one or more olefins in the presence of a catalyst system as claimed in claim 1.

3. The use of a catalyst system as claimed in claim 1 for preparing a polyolefin.

## Revendications

1. Système de catalyseur contenant a) au moins un composé chimique à action co-catalytique A, b) au moins un métallocène B et c) au moins un composé aluminique C, dans lequel le composé chimique A est un composé organoboro-aluminique, qui contient des motifs de formule I : 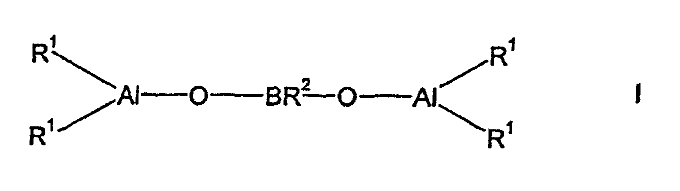 dans laquelle les R¹ sont identiques ou différents et représentent un atome d'hydrogène, un atome d'halogène, un groupe carboné en C₁ à C₄₀ tel qu'un groupe alkyle en C₁ à C₂₀, halogénoalkyle en C₁ à C₂₀, alcoxy en C₁ à C₁₀, aryle en C₆ à C₂₀, halogénoaryle en C₆ à C₂₀, aryloxy en C₆ à C₂₀, arylalkyle en C₇ à C₄₀, halogénoarylalkyle en C₇ à C₄₀, alkylaryle en C₇ à C₄₀, halogénoalkylaryle en C₇ à C₄₀ ou R¹ peut être un groupe OSiR₃³, où les R³ sont identiques ou différents et représentent un atome d'hydrogène, un atome d'halogène, un groupe carboné en C₁ à C₄₀ tel qu'un groupe alkyle en C₁ à C₂₀, halogénoalkyle en C₁ à C₂₀, alcoxy en C₁ à C₁₀, aryle en C₆ à C₂₀, halogénoaryle en C₆ à C₂₀, aryloxy en C₆ à C₂₀, arylalkyle en C₇ à C₄₀, halogénoarylalkyle en C₇ à C₄₀, alkylaryle en C₇ à C₄₀, halogénoalkylaryle en C₇ à C₄₀, R² est un atome d'halogène, un groupe halogénoalkyle en C₁ à C₂₀, halogénoaryle en C₆ à C₂₀, halogénoarylalkyle en C₇ à C₄₀, halogénoalkylaryle en C₇ à C₄₀, ou R² peut être un groupe OSiR₃³, où les R³ sont identiques ou différents et représentent un atome d'halogène, un groupe halogénoalkyle en C₁ à C₂₀, halogénoaryle en C₆ à C₂₀, halogénoarylalkyle en C₇ à C₄₀, halogénoalkylaryle en C₇ à C₄₀,
et contenant en outre un support.

2. Procédé de préparation d'une polyoléfine par polymérisation d'une ou de plusieurs oléfines, en présence d'un système de catalyseur selon la revendication 1.

3. Mise en oeuvre d'un système de catalyseur selon la revendication 1 pour préparer une polyoléfine.
